# EUROPEAN PATENT SPECIFICATION

(11) **EP 1 261 411 B1**
(45) Date of publication and mention of the grant of the patent: **28.11.2012**
(21) Application number: 01909986.0
(22) Date of filing: 06.03.2001
(51) Int. Cl.: B01D 53/22, B01D 61/28, B01D 61/30, B01D 63/02, B01D 63/06

(54) **APPARATUS FOR SEPARATING FLUIDS THROUGH A MEMBRANE**
VORRICHTUNG ZUR TRENNUNG VON FLUIDEN DURCH EINE MEMBRANE
DISPOSITIF PERMETTANT DE SEPARER DES FLUIDES AU MOYEN D'UNE MEMBRANE

(30) Priority: 06.03.2000 US 187051 P; 03.07.2000 GB 0016368
(43) Date of publication of application: 04.12.2002
(73) Proprietor: KVAERNER PROCESS SYSTEMS AS, 1327 Lysaker (NO)
(72) Inventor: DANNSTRÖM, Henrik, N-3213 Sandefjord (NO); FALK-PEDERSEN, Olav, N-3120 TØNSBERG (NO); STUKSRUD, Dag, Birger, N-3244 Sandefjord (NO); GRØNVOLD, MARIANNE, SØBYE, N-3936 Porsgrunn (NO); RØNNING, Odd, N-3214 Sandefjord (NO)
(74) Representative: Onsagers AS
(86) International application number: PCT/GB2001/000964
(87) International publication number: WO 2001/066231

(56) References cited:
- WO-A-99/58231
- US-A- 3 735 558
- US-A- 4 016 083
- US-A- 4 219 426
- US-A- 5 149 340
- PATENT ABSTRACTS OF JAPAN vol. 013, no. 328 (C-621), 24 July 1989 (1989-07-24) & JP 01 107826 A (UBE IND LTD), 25 April 1989 (1989-04-25)
- PATENT ABSTRACTS OF JAPAN vol. 1999, no. 05, 31 May 1999 (1999-05-31) & JP 11 028341 A (DAISEN MENBUREN SYST KK), 2 February 1999 (1999-02-02)

## Description

The invention relates to apparatus and methods for separating one or more components from a fluid through a membrane, at ambient or elevated pressures, and to modules containing such a membrane. The basic principles of one type of separating process to which the present invention is applicable is described in WO 98/04339.

In modern industry, mass and heat transfer processes are among the most common processes. Mass transfer processes include contacting columns and extraction processes. In a contacting column such as an absorber or a desorber, a gas is contacted with a liquid over a high surface area, allowing the desired chemical or physical mass transfer processes to take place in a controlled manner. Afterwards the gas and the liquid are separately and usually continuously transported away from the column. Due to the intimate contact between the fluids, a parallel heat transfer also takes place in cases where the fluids have different temperatures.

Contacting devices can also simply be mixing devices with subsequent separators, which is used in for example processes involving two immiscible liquids. These processes include liquid/liquid extraction.

Conventional equipment does however have certain limitations and drawbacks. These include the limited gas to liquid ratios in columns, requirements as to orientation and in most cases also the fact that entrainment of one of the fluids in to the other often takes place, causing nuisance in downstream equipment and/or loss of product. For liquid/liquid extraction processes, the degree of immiscibility is crucial.

Membrane contactors provide means of carrying out the processes mentioned above without these disadvantages. In a membrane contactor, two (or more) fluids are exposed to each other through a membrane. The membrane has the property to restrain one or more components of each fluid, while allowing a relatively higher proportion of selected components to pass through the membrane. The membrane may also instead of being selective in itself only provide such surface properties that for example components in liquid form are not able to pass, but components in gaseous form can. An example of such a membrane is a (human) lung, where blood is not able to pass through the lung "membrane", but oxygen, water and CO₂ are readily transported through driven by the partial pressure difference of these on the two sides of the lung.

For industrial applications the membrane provides a physical barrier between the two fluids, thus eliminating problems related to mixing of the fluids. The transport of a fluid is constrained to either side of the membrane, thus allowing full flexibility in terms of turndown (from zero to full flow) without affecting the other side of the membrane. This also allows the orientation of the unit to be arbitrary and independent of gravity.

The membrane used in each process is selected to have the properties that are best suited for that particular application.

In high pressure processes, the membrane contactor has to be housed in a pressure vessel designed for the purpose. The requirements to functionality, strength and corrosion resistance at elevated pressure and temperature have to be met. A reliable and suitable means of doing this is therefore required.

It is known from US 5916647 and EP 941758 to provide pressure vessels made of polyolefin and containing a bundle of hollow fibre membrane contactors. The bundle has a hollow centre via which shell side fluid flows into and out of the bundle, and the hollow fibre ends are potted to provide for tube side fluid flow into and out of the bundle. The pressure vessel is provided at each end with inlet and outlet pipes disposed centrally so as to mate in the hollow centre of the bundle in a manner sealed from the tube side outlet and inlet. The assembly of the bundle into the pressure vessel is therefore not simple. Moreover, the need for a hollow centre in this type of membrane configuration reduces the amount of active membrane area per unit volume.

From US 5264171 it is known to provide apparatus comprising a housing which receives a bundle of hollow fibre membrane contactors with a type of inlet/outlet configuration different from that described above. Figure 1 of US 5264171 shows a housing with a fluid inlet port and a fluid outlet port at opposite axial ends for tube side flow, and a fluid inlet port and a fluid outlet port for shell side flow which are disposed axially inwardly of the axially opposite ends at the sides of the housing. An impermeable wrapping means covers the exterior cylindrical surface of the bundle of hollow fibre membrane contactors. An opening is provided in the impermeable wrapping means to communicate with the side inlet port of the housing, and a corresponding opening is provided to communicate with the side outlet port of the housing. The edges of the impermeable wrapping means surrounding the openings are sealed to the housing side inlet and outlet ports respectively, to prevent leakage from the shell side space.

It is therefore necessary in this arrangement to fit the bundle into the housing in such a way that the openings in the impermeable wrapping means register with the housing side inlet and outlet ports, with the edges of the openings properly sealing with the ports. This tends to make the assembly of the apparatus difficult, with a risk of unreliable sealing of the shell side space in the region of the housing side inlet and outlet ports, for example if exact rotational alignment about the longitudinal axis between the bundle and the housing is not achieved.

US 4219426 discloses a separating device for hemodialysis, comprising a housing accommodating a bundle of tubular, selectively permeable membranes. The membranes are supported in the housing by a number of elastic rings which constrict the bundle and reduce bypass of shell side fluid.

US 5419240 describes apparatus for contacting first and second fluids at elevated pressures with a membrane such that one or more components of one of the fluids passes through the membrane into the other fluid, the apparatus being assembled from a housing and a membrane module, the membrane module comprising a plurality of membrane tubes with opposite axial ends which are potted to separate the shell sides of the tubes from the tube sides of the tubes at the axial ends thereof, and the membrane module being housed in the housing and having a first fluid inlet and a first fluid outlet for fluid flow on the shell side of the membrane tubes and, at the opposite axial ends of the membrane tubes, a second fluid inlet and a second fluid outlet for fluid flow on the tube side of the membrane tubes, wherein the apparatus further comprises a first seal extending round the membrane module and sealing between an outside wall of the membrane module and an inside wall of the housing so as to separate the first fluid inlet from the first fluid outlet. The present invention is characterised in that the apparatus further comprises a pair of second seals each extending round the membrane module and sealing between the outside wall of the membrane module and the inside wall of the housing, the second seals being axially spaced from the first seal and on opposite axial sides thereof, so as to define a first fluid inlet region between the first seal and one of the second seals and a first fluid outlet region between the first seal and the other of the second seals, and said first seal and said pair of second seals all permitting assembly into the housing, in the axial direction, of said membrane module with its potted membrane tubes.

With such an arrangement, the assembly of the membrane module into the housing can be relatively straight forward, in that exact registration of the first fluid inlet and outlet with respective inlet and outlet ports of the housing is not critical. This may also enable the membrane module to be used in a conventional housing. For example, the membrane module may be used in a conventional pressure vessel without having to specially design the pressure vessel. The membrane module may be retrofitted to an existing housing, e. g. pressure vessel.

Various types of membrane may be used in the membrane module, for example paste extruded membrane tubes or spirally wound membranes. In a preferred embodiment, the membrane module comprises a plurality of membrane layers, each membrane layer comprising a plurality of membrane tubes arranged side by side with connecting portions connecting laterally adjacent membrane tubes, and the membrane layers being stacked in alternation with spacers. Such an arrangement can achieve a very effective mass transfer across the membranes. The membrane layers are preferably as described in US 6010560.

It will be appreciated that the word "tube" used herein in relation to the membrane is not intended to be limiting as to the diameter size of the tube and should therefore be understood to cover various diameters of tube, including tubes in the form of fibres.

The seal extending round the membrane module is preferably positioned at an intermediate location along the membrane module, spaced from axial ends thereof.

The second seals can in effect define isolated inlet and outlet regions, namely an inlet region between the first seal and one of the second seals and an outlet region between the first seal and the other of the second seals.

Appropriate sealing arrangements may be provided for the second fluid inlet and outlet. It is however preferred and advantageous for the second seals additionally to serve to separate the first fluid inlet or outlet from the second fluid inlet or outlet.

The housing may be a pressure vessel or pipe spool or other form of housing. In a preferred embodiment, the housing has respective inlet and outlet ports cooperating with the fluid inlets and outlets of the membrane module. In a particularly preferred arrangement: a first fluid inlet port of the housing is arranged to supply the first fluid to the first fluid inlet, which is provided in the outside wall of the membrane module; a first fluid outlet port of the housing is arranged to receive the first fluid from the first fluid outlet, which is provided in the outside wall of the membrane module; a second fluid port of the housing is arranged to supply the second fluid to the second fluid inlet of the membrane module, which is provided at an axial end of the membrane module; and a second fluid outlet port of the housing is arranged to receive the second fluid from the second fluid outlet of the membrane module, which is provided at the opposite axial end of the membrane module. Preferably, the first inlet and outlet ports for the first fluid are disposed axially inwardly of opposite axial ends of the housing, preferably being laterally directed, and the second inlet and outlet ports for the second fluid are provided at the axially opposite ends of the housing, preferably being axially directed.

The housing may have more than one first fluid inlet port and more than one first fluid outlet port. For example, the housing may have a pair of diametrically opposed first fluid inlet ports and a pair of diametrically opposed first fluid outlet ports.

In the case where a plurality of membrane tubes are used, it is preferred for the first fluid to flow on the shell side of the tubes and for the second fluid to flow on the tube side. Thus, in the preferred arrangement discussed above, the first inlet and outlet ports of the housing, and the corresponding first inlet and first outlet of the membrane module, are provided for shell side flow; whilst the second inlet and outlet ports of the housing, and the corresponding second inlet and second outlet of the membrane module, are provided for tube side flow.

It will be appreciated that by arranging a second seal axially between an end port and a lateral port of the housing, these ports may be sealingly separated from each other. Thus, the first seal and the pair of second seals can advantageously isolate the four housing ports from each other by sealing between the outside wall of the membrane module and the inside wall of the housing. Four inlet and outlet regions can effectively be defined at the point when the membrane module is inserted, e.g. axially, into the housing.

It is desirable to use the available space in the housing and thus optimise the performance of the apparatus relative to its size. Preferably, therefore, the membrane module has a cross-sectional shape corresponding substantially to that of the housing so as to fit closely therein.

The membrane module is most conveniently assembled into the housing in the axial direction. The housing may therefore have at least one full diameter flanged opening for insertion of the membrane module. In some circumstances, such as for slender membrane modules, both ends may have a full diameter flange. Flanges do however add to the cost and weight of the housing and alternatively therefore an end cap may be welded to the housing to close an end thereof, after insertion of the membrane module. If necessary, such a welded end cap can be burned off if the membrane module needs to be changed after a period of service.

It is preferred for the first-mentioned seal to be placed in the housing before insertion of the membrane module into the housing. This is because the seal is ideally located and retained by a groove and in general it is easier to provide a groove in the housing than in the membrane module. Preferably, therefore, the seal is received in a groove in the housing. It is particularly preferred to provide the groove in a separate member which is secured to a main body of the housing, e.g. by welding. This avoid having to form a groove directly in the main body, the inside of which, particularly in the case of a long slender housing, may be difficult to access.

The separate member may be secured inside a single main body of the housing. However, if welding is used, the welding stresses may cause distortion and prevent proper sealing. This problem can be solved by providing the housing with two body portions to each of which the separate member is secured to form a connection between the body portions. The separate member may then be of greater external diameter than the body portions thereby providing a strengthening flange which is not significantly distorted during the securing process.

The second seals may also be placed in the housing before insertion of the membrane module. However, in the case of a long slender module proper axial alignment can be difficult to control. Hence, the second seals may preferably be placed after insertion of the membrane module into the housing, before closing off the housing with end caps, with or without flanges.

Flow of one of the fluids may be at an angle, such as a right angle, to the membrane surface (this would be shell side flow in the case of conventional membrane tubes or hollow fibres). Such crossflow is commonly used in membrane separating processes. Preferably, however, a first fluid flow path is defined along one surface of the membrane and a second fluid flow path is defined along an opposite surface of the membrane, wherein the direction of flow of the first and second fluids along their respective paths is substantially parallel to said surfaces of the membrane. The first and second fluid flows are ideally in directions opposite to each other. These arrangements have been found to work particularly well in the preferred embodiments of the invention.

The membrane module preferably has at least one lateral opening in its outside wall to form the first fluid inlet and at least one lateral opening in its outside wall to form the first fluid outlet. It may be preferred to arrange for the lateral opening(s) to be positioned on the side of the pressure vessel remote from the inlet/outlet port thereof, in order to obtain a more even flow into the membrane module and avoid excessive flow velocities. In such circumstances, a degree of rotational alignment will be necessary but it may not have to be exact.

Preferably, however an even flow into the membrane module without excessive flow velocities is obtained by arranging the first fluid inlet to permit flow of the first liquid laterally into the membrane module substantially around its entire periphery. This arrangement is considered to be of independent patentable significance, as discussed further below.

In known systems, multiple membrane tubes are arranged in an axially extending bundle with their ends potted so that the fluid for tube side flow can be directed into the axial end of the bundle and the fluid for shell side flow can be directed into the sides of the bundle inwardly of the axial ends. Efforts have been made in the art to optimize the efficiency of fluid to membrane contact but the known systems still suffer from a lack of use of the maximum available membrane surface area.. In particular, shortcomings in the design of the inlet and outlet arrangements for shell side flow often mean that there are membrane portions in dead spaces where little or no shell side flow takes place. For example, in the case of US 5264171 mentioned above, the external housing of the membrane contactor apparatus has a single fluid inlet port which feeds into a single opening in the impermeable wrapping means in sealed registration with that port, with the result that the membranes on the side of the housing opposite the port may be in dead space as far as shell side flow is concerned.

The known systems are therefore not as efficient as they could be, in that not all of the membrane surface area is providing contact between the tube and shell side fluid flows. The above inlet arrangement for a membrane bundle improves the shell side flow in the inlet region and therefore maximises the use of the available membrane surface area.

This arrangement can reduce dead spaces and maximise the axial length of membrane tubes available for fluid contacting. Moreover, it is generally desirable for the bundle to be provided in a mechanically rigid form, particularly where it is to be inserted in a housing. Thus the bundle may be provided as part of a membrane module, as discussed above, having an outside wall. By arranging the first fluid inlet means to extend peripherally round the bundle, it is possible to avoid the use of a single large opening in the outside wall which would result in a non-symmetrical load bearing capacity and potential adverse bending during installation of the bundle or even leakage past the seals caused by distortion.

The inlet means may comprise one continuous inlet opening in the periphery of the bundle. However this may not always be practical from a mechanical integrity point of view and there may be intervals between plural openings in the periphery of the bundle. Preferably, the inlet means comprises a plurality of circumferentially spaced inlet openings in the periphery of the bundle. The periphery of the bundle may be defined by an impermeable outside wall around the bundle, such as the outside wall of a membrane module.

In a preferred embodiment, the membrane tubes are arranged in a plurality of layers extending laterally across the bundle, for example of the type shown in US 6010560. Flow within the bundle is generally easier parallel to the layers than passing from one layer to another (although this is usually allowed for by suitable holes in the layers and spacers if provided). Advantageously, therefore, the inlet openings are arranged in the periphery of the bundle so that each membrane layer is exposed to at least one of the inlet openings.

If the circumferential spacing between adjacent lateral openings in the outside wall is too small, this can undesirably weaken the mechanical integrity of the wall. It is therefore advantageous to provide at least two rows of circumferentially spaced inlet openings in the periphery of the bundle, with the centres of inlet openings in adjacent rows being circumferentially offset. With such an arrangement, every membrane layer can be exposed to a respective inlet opening whilst an adequate circumferential spacing between the openings in the same row is provided for mechanical strength.

In the case of a membrane layer, it is possible to expose the layer to a respective inlet opening at only one side of the layer. This means that a membrane layer exposed on one side need not be exposed on the other side, so that the circumferential spacing between adjacent inlet openings in the periphery of the bundle on that other side may be greater, allowing mechanical rigidity and strength to be retained. Thus, in this arrangement, some of the membrane layers are exposed to a respective inlet opening at only one side of the respective layer.

As discussed above, the bundle may be housed in a housing having an inlet port for the first fluid. In such an arrangement, one way of providing for flow laterally into the bundle substantially around its entire periphery is to provide an inlet chamber arranged to receive the first fluid from the inlet port and extending round the periphery of the bundle. In the case of the preferred bundle of circular cross-sectional shape, the inlet chamber will be annular.

In order to avoid a high pressure drop and mechanical forces on the bundle, the first fluid flow speed should decrease from the inlet port to the periphery of the bundle. This can be achieved across the width of the inlet chamber, providing the width is greater than a certain size. Preferably, the width of the inlet chamber, measured between an inside wall of the housing and the periphery of the bundle, is greater than or equal to one quarter of the width of the inlet port.

It will be appreciated that the features described above in relation to the inlet means of the bundle are generally applicable also to appropriate outlet means of the bundle. Thus the apparatus may comprise outlet means disposed axially inwardly of the axial end of the bundle remote from the inlet means, the outlet means extending peripherally round the bundle and being arranged to permit flow of the first fluid laterally out of the bundle substantially around its entire periphery. The outlet means may comprise a plurality of circumferentially spaced outlet openings in the periphery of the bundle, and/or an outlet chamber extending round the periphery of the bundle, the outlet openings and the outlet chamber being analogous respectively to the inlet openings and the inlet chamber.

The invention also extends to a membrane module for use in apparatus as described herein and to mass transfer processes using such apparatus.

Certain preferred embodiments of the invention will now be described by way of example and with reference to the accompanying drawings, in which:
Figure 1 is a side view of a membrane module;
Figure 2a is a cross-section on lines A-A of Figure 1;
Figure 2b is a cross-section on lines B-B of Figure 1;
Figure 3 is a side view of a housing in the form of a pressure vessel for containing the membrane module;
Figure 4 shows the pressure vessel in an open condition for insertion of the membrane module;
Figure 5 is a side view of the pressure vessel showing the membrane module contained within;
Figure 6 is a view, to an enlarged scale, of part of a modified housing.

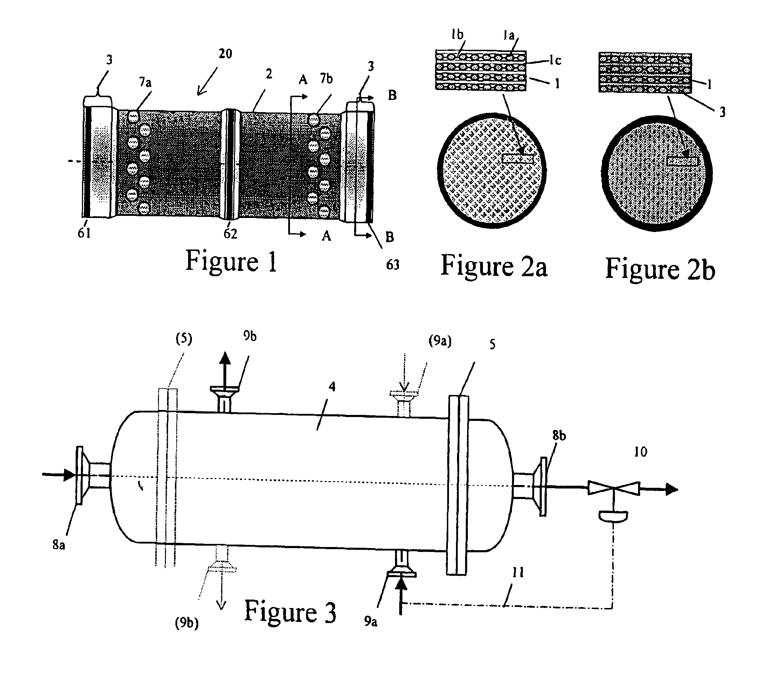

The membrane module 20 comprises a bundle 1 of membrane tubes contained in a canister 2 made of a plastics composite material or metal. The bundle 1 consists of several layers, each membrane layer comprising a plurality of membrane tubes 1a arranged side by side with connecting portions 1b connecting laterally adjacent membrane tubes, the membrane layers being stacked in alternation with spacers 1c. The membrane layers are of the type shown in US 6010560. As seen in Figure 2, the layers are arranged such that substantially the entire cross section of the tubular canister 2 is occupied.

The membrane tubes are potted at the opposite ends of the canister by potting 3. A thermosetting polymeric material is used as matrix material in between the individual membrane tubes. In addition to ensuring that inlet/outlet flow may only pass through the membrane tubes, i.e. tube side flow, the potting ensures adhesion, load bearing and mechanical stability to the membrane bundle. Axially inwardly of the potted ends, but adjacent thereto, the canister is provided with a set of openings 7a, 7b for inlet and outlet flow on the membrane shell side. Each set of openings 7a,7b comprises a pair of longitudinally spaced rows, the openings in each row being circumferentially spaced from each adjacent opening. As shown, the centres of the openings in one row are circumferentially offset from those in the other row. Thus, the openings of the pair of rows are arranged so that every membrane layer is exposed to at least one opening.

Three annular seal surfaces 61, 62 and 63 are provided around the outside of the canister 2. A first annular seal surface 61 is disposed at a position axially intermediate of the canister ends, the other two annular seal surfaces 62, 63 being axially spaced from the first annular seal surface 61 towards the respective canister ends.

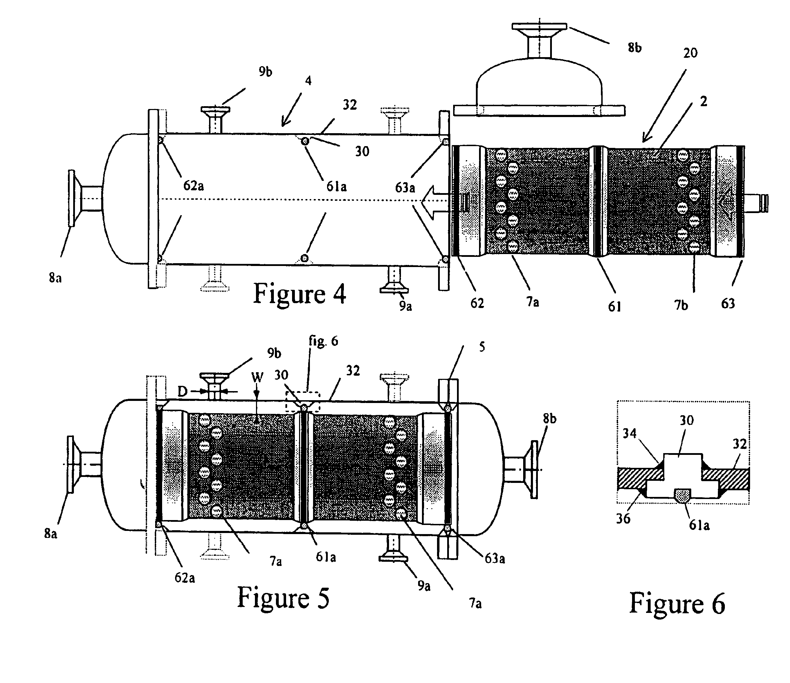

Figure 3 shows a pressure vessel 4. At one end this has a full size flange opening 5, enabling easy insertion of the membrane module 20 as shown in Figure 4. In a modification, a flange opening 5 is provided at both ends and an additional flange opening 5 is therefore shown in dotted lines. At its axial ends the pressure vessel has an inlet port 8a and an outlet port 8b. Axially inwardly of the ends, but adjacent thereto, the pressure vessel 4 has a sideways facing inlet port 9a and a sideways facing outlet port 9b. In a further modification, a pair of inlet ports 9a and a pair of outlet ports 9b are provided and these are shown in dotted lines. Each port of a pair is diametrically opposite the other port of the pair. The ports 8a, 8b are provided for tube side flow, whilst the ports 9a, 9b are provided for shell side flow.

A back pressure regulator 10 is provided downstream of the outlet port 8b and is arranged to receive a reference signal 11 indicative of the pressure at inlet port 9a. The back pressure regulator 10 is arranged to ensure that the differential pressure across the membranes does not exceed a predetermined amount, thereby ensuring that the membranes are not damaged in use.

Figure 4 shows three annular seals 61a, 62a and 63a provided inside the pressure vessel for sealing engagement respectively with the three annular seal surfaces 61, 62 and 63. At the flanged opening 5, each flange has a bevelled edge so as to form a V-shaped groove when the end cap closes the pressure vessel 4. The seal 63a is installed after the membrane module 20 has been inserted into the pressure vessel 4. When the flanges are tightened together, the end seal 63a is compressed.

Intermediate seal 61a is supported in an annular groove formed in a separate member in the form of a ring 30 welded inside the pressure vessel to the inside of its cylindrical wall 32. In the modification shown in Figure 6 the pressure vessel is formed as two body portions to each of which a ring 30 incorporating a radial outer flange is secured to form a connection between the body portions. The ring is welded to the body portions by outer welds 34 and inner welds 36. The ring 30 shown in Figure 6 also has an annular groove for supporting seal 61a.

End seal 62a is, like intermediate seal 61a, supported in an annular groove in a separate member where no flanged opening is provided at that end. Both seals 61a and 62a are sufficiently flexible to give little resistance during installation of the membrane module into the pressure vessel. If an additional flanged opening is provided at the end where seal 62a is located, then the arrangement will be the same as provided for end seal 63a.

Figure 5 shows the membrane module 20 contained in the pressure vessel 4. It will be seen that once the membrane module is inserted in the pressure vessel, the annular seals 61a, 62a, 63a ensure the separation of the pressure vessel inlet and outlet ports as required. The three annular seals effectively create four isolated inlet and outlet regions within the pressure vessel. Between seal 61a and seal 62a an annular outlet chamber communicates with the pressure vessel outlet port 9b. Between the seal 61a and the seal 63a an annular inlet chamber communicates with the pressure vessel inlet port 9a. Inlet port 8a is located to the left of seal 62a and this seal ensures that inlet 8a is separated from outlet 9b. Outlet 8b is disposed to the right of seal 63a and this seal ensures that outlet 8b is separated from inlet 9a.

The provision of the three annular seals in this way means that there is no need for any particular rotational alignment of the membrane module and the pressure vessel in embodiments such as that illustrated where openings 7a, 7b are provided at equal intervals around the entire membrane module circumference.

The width of the annular inlet and outlet chambers is shown as W and the diameter of the inlet and outlet ports 9a,9b is shown as D. The width W is preferably greater than or equal to one quarter of the diameter D, in order to allow for the desired reduction in flow velocity downstream of the inlet port 9a and increase in flow velocity upstream of the outlet port 9b.

With larger values of W, the flow velocities into or out of the membrane module are reduced, thereby reducing the likelihood of membrane damage. On the other hand, by minimising W, the diameter of the membrane module 20 can be maximised for a given diameter of pressure vessel 4, and hence greater use of available space can be achieved. These conflicting requirements can be balanced if W is equal to one quarter of D, in which case the flow area of the port is equal to the cross-sectional area of the respective annular chamber. This produces good flow conditions, without excessive flow velocities which might damage the membranes, whilst making efficient use of the available space in the pressure vessel. More preferably, therefore, W is approximately equal to one quarter of D, for example within ±20% of one quarter of D. Where additional inlet and outlet ports 9a, 9b are used, as shown in dotted lines in Figure 4, then the diameter D of the ports can be reduced and the required width W of the annular chambers can be reduced by the same ratio.

The canister does not need to be designed for the same pressure as the pressure vessel, only to withstand the differential pressure equal to the pressure drop between the tube and the shell side of the membranes at any point. A larger pressure variation, which may harm the membranes or the module, is prevented by the membrane protection system, 10,11, which is external of the pressure vessel. Additional reinforcement of the canister may however be necessary in the region of the seals for these regions to achieve sufficient back pressure on the seals, so that the seals can function properly.

The canister is substantially rigid to facilitate its assembly into the pressure vessel. It may be made of metal or fibre reinforced plastics. In the latter case, the canister may be made by filament winding. The winding may be effected with rods in the mandrel to achieve the desired openings without reducing the mechanical strength of the canister.

The flange opening 5 allows for both easy installation and retraction of the canister as shown in Fig. 3. Retraction of the canister can preferably be done with two textile straps glued into the potting or wound into the canister tube if composite material is selected. For more slender canisters or a narrow annulus, where it might be more complicated to assemble the canister into the pressure vessel, both ends may have a full diameter flange.

The seals in the annulus around the membrane module help to achieve the correct flow pattern. The seals at each end, 62a and 63a, of the module prevent mixing of tube side fluid and shell side fluid in the vessel. The mid section seal 61a prevents an undesirable shortcut of the shell side fluid. In both cases the pressure difference over the seals will not be higher than the pressure drop along the module plus any additional contribution from the surrounding process system. These seals should preferably be made of an inert material and according to a design suitable for the purpose, and will in a preferred case be simple O-rings or more compressible spring loaded lip seals. Where some axial movement, due to thermal expansion are foreseen square profiles such as provided by James Walker might be used. A "D" profile, which is stable against twisting, may be used.

The seal 61a at the mid section of the annulus may be an inflatable seal type to ease the assembly. Such a seal can allow a wider gap and will be inflated after assembly. Such seals are available from Seal Master Corporation or Mechanical Research & Design Inc. Inflatable seals are of greatest use at ambient or low pressure applications, it not being generally practical to pressurise a seal to a pressure greater than natural gas pressure.

The membrane module should have a shell side feed arranged in such a way that an even distribution of shell side fluid can be ensured so as to protect the membranes from harmful inlet flow, such as high velocity flows which might cause cavitation. This can be prevented by adding a reducer after the feed port, e.g. nozzle, or a bigger annulus in this section of the pressure vessel. A preferred solution is to use a baffle inside the pressure vessel or to place the inlet opening(s) of the canister on the opposite side of the pressure vessel inlet port.

The canister tube should preferably have multiple openings 7a, 7b arranged to secure an even distribution of the flow into the membranes or it could have one elliptical slot. The optimised design will be different for each particular case. The openings should be located axially as close to the membrane potting as possible, in order to allow for a counter current flow over a maximum axial length through the membrane module.

The tube side inlet and outlet of the membrane module are provided at the potted ends thereof which communicate with the inlet and outlet ports 8a,8b of the pressure vessel. Shell side inlet and outlet ports 9a, 9b of the pressure vessel are arranged such that they communicate with the corresponding openings 7a, 7b, when the module is installed in the pressure vessel. The shell side feed could also be through multiple nozzle connections, or through a ring chamber if further improved distribution on the shell side is required.

The total area of the ports should be such that the fluid velocity on entrance into the membrane bundle, preferably does not exceed 500 mm/s for a liquid and 5000 mm/s for a gas, or creates a too high pressure drop.

There are many mass transfer processes in which the present invention may be applied, as is known in the art. The invention is particularly suitable for removing carbon dioxide, hydrogen sulphide and water from natural gas, but this is just one possible use.

Although the use of a pressure vessel renders the apparatus suitable for mass transfer processes at elevated pressures, the apparatus can also be used at ambient pressures. Typical elevated pressures at which the apparatus is useful are those in excess of 10 bar g (10⁶ N/m² above atmospheric pressure).

## Claims

1. Apparatus for contacting first and second fluids at elevated pressures with a membrane such that one or more components of one of the fluids passes through the membrane into the other fluid, the apparatus being assembled from a housing (4) and a membrane module (20), the membrane module (20) comprising a plurality of membrane tubes with opposite axial ends which are potted (3) to separate the shell sides of the tubes from the tube sides of the tubes at the axial ends thereof, and the membrane module (20) being housed in the housing (4) and having a first fluid inlet (9a) and a first fluid outlet (9b) for fluid flow on the shell side of the membrane tubes and, at the opposite axial ends of the membrane tubes, a second fluid inlet (8a) and a second fluid outlet (8b) for fluid flow on the tube side of the membrane tubes, wherein the apparatus further comprises a first seal (61a) extending round the membrane module (20) and sealing between an outside wall of the membrane module (20) and an inside wall of the housing (4) so as to separate the first fluid inlet (9a) from the first fluid outlet (9b), **characterised in that** the apparatus further comprises a pair of second seals (62a, 63a) each extending round the membrane module (20) and sealing between the outside wall of the membrane module (20) and the inside wall of the housing (4), the second seals (62a, 63a) being axially spaced from the first seal (61a) and on opposite axial sides thereof, so as to define a first fluid inlet region between the first seal (61a) and one of the second seals (62a, 63a) and a first fluid outlet region between the first seal (61a) and the other of the second seals (62a, 63a), and said first seal (61a) and said pair of second seals (62a, 63a) all permitting assembly into the housing (4), in the axial direction, of said membrane module (20) with its potted membrane tubes.

2. Apparatus as claimed in claim 1, wherein the membrane module (20) has at least one lateral opening in its outside wall to form the first fluid inlet (9a) and at least one lateral opening in its outside wall to form the first fluid outlet (9b).

3. Apparatus as claimed in claim 1 or 2, wherein the first fluid inlet (9a) and outlet (9b) are disposed axially inwardly of said opposite axial ends.

4. Apparatus as claimed in any preceding claim, wherein the membrane module (20) has a cross-sectional shape corresponding substantially to that of the housing (4) so as to fit closely therein.

5. Apparatus as claimed in any preceding claim, wherein the housing (4) has at least one full diameter flanged opening (5) for insertion of the membrane (20) module.

6. Apparatus as claimed in any preceding claim, wherein the first seal (61a) is received in a groove in the housing (4).

7. Apparatus as claimed in claim 6, wherein the groove is provided in a separate member (30) secured to two body portions of the housing (4) to form a connection therebetween.

8. Apparatus as claimed in any preceding claim, wherein the membrane module (20) comprises a plurality of membrane layers, each membrane layer comprising a plurality of membrane tubes arranged side by side with connecting portions connecting laterally adjacent membrane tubes, and the membrane layers being stacked in alternation with spacers.

9. Apparatus as claimed in any preceding claim, wherein the membrane module (20) further comprises inlet means disposed axially inwardly of one of said axial ends of the module (20) for introducing said first fluid into the module (20), wherein the inlet means extends peripherally round the module (20) and is arranged to permit flow of said first fluid laterally into the module (20) substantially around its entire periphery.

10. Apparatus as claimed in claim 9, wherein the inlet means comprises a plurality of circumferentially spaced inlet openings (7a) in the periphery of the module (20).

11. Apparatus as claimed in claim 10, wherein the membrane tubes are arranged in a plurality of layers extending laterally across the module (20), and wherein each membrane layer is exposed to at least one of said inlet openings (7a).

12. Apparatus as claimed in claim 10 or 11, wherein at least two rows of circumferentially spaced inlet openings (7a) are provided in the periphery of the module (20), with the centres of inlet openings (7a) in adjacent rows being circumferentially offset.

13. Apparatus as claimed in any of claims 9 to 12, wherein an inlet chamber is arranged to receive the first fluid from the inlet port and extends round the periphery of the module (20).

14. Apparatus as claimed in claim 13, wherein the width of the inlet chamber, measured between an inside wall of the housing (4) and the periphery of the module (20), is greater than or equal to one quarter of the width of the inlet port (9a).

15. Apparatus as claimed in any preceding claim, wherein the first and second fluid flows are in axial directions opposite to each other.

## Patentansprüche

1. Vorrichtung zum Kontaktieren erster und zweiter Fluide bei hohen Drücken mit einer Membran, sodass eine oder mehrere Komponenten eines der Fluide durch die Membran in das andere Fluid hindurchtritt, wobei die Vorrichtung aus einem Gehäuse (4) und einem Membranmodul (20) aufgebaut ist, wobei das Membranmodul (20) mehrere Membranröhren mit entgegengesetzten axialen Enden aufweist, die vergossen sind, (3) um die Umfassungsseiten der Röhren von den Röhrenseiten der Röhren an den axialen Enden von diesen zu trennen, und wobei das Membranmodul (20) im Gehäuse (4) aufgenommen ist und es einen ersten Fluideinlass (9a) und einen ersten Fluidauslass (9b) zum Fluidfluss auf die Gehäuseseite der Membranröhren und, an den entgegengesetzten axialen Enden der Membranröhren, einen zweiten Fluideinlass (8a) und einen zweiten Fluidauslass (8b) zum Fluidfluss auf die Röhrenseite der Membranröhren aufweist, wobei die Vorrichtung ferner eine erste Abdichtung (61a) aufweist, die sich um das Membranmodul (20) herum erstreckt und welche zwischen einer Außenwand des Membranmoduls (20) und einer Innenwand des Gehäuses (4) so abdichtet, dass es den ersten Fluideinlass (9a) vom ersten Fluidauslass (9b) trennt, **dadurch gekennzeichnet, dass** die Vorrichtung ferner ein Paar zweiter Abdichtungen (62a, 63a) aufweist, die sich jeweils um das Membranmodul (20) herum erstrecken und zwischen der Außenwand des Membranmoduls (20) und der Innenwand des Gehäuses (4) abdichten, wobei die zweiten Abdichtungen (62a, 63a) axial von der ersten Abdichtung (61a) beabstandet sind und sie auf entgegengesetzten axialen Seiten von dieser sind, sodass sie einen ersten Fluideinlassbereich zwischen der ersten Abdichtung (61a) und einer der zweiten Abdichtungen (62a, 63a) und einen ersten Fluidauslassbereich zwischen der ersten Abdichtung (61a) und der jeweiligen anderen zweiten Abdichtung (62a, 63a) definieren, und wobei die erste Abdichtung (61a) und das Paar an zweiten Abdichtungen (62a, 63) alle einen Zusammenbau in das Gehäuse (4) in der Axialrichtung hinein von dem Membranmodul (20) mit der vergossenen Membranröhren ermöglichen.

2. Vorrichtung nach Anspruch 1, bei der das Membranmodul (20) wenigstens eine Seitenöffnung in ihrer Außenwand, um den ersten Fluideinlass (9a) auszubilden, und wenigstens eine Seitenöffnung in ihrer Außenwand aufweist, um den ersten Fluidauslass (9b) auszubilden.

3. Vorrichtung nach Anspruch 1 oder 2, bei der der erste Fluideinlass (9a) und Auslass (9b) axial innerhalb der entgegengesetzten axialen Enden vorgesehen sind.

4. Vorrichtung nach dem vorhergehenden Anspruch, bei der das Membranmodul (20) eine Querschnittsform aufweist, die im Wesentlichen zu derjenigen des Gehäuses (4) passt, sodass es in dieses eng eingepasst ist.

5. Vorrichtung nach einem der vorhergehenden Ansprüche, bei der das Gehäuse (4) wenigstens eine mit Flansch versehene Öffnung (5) vom vollen Durchmesser zum Einführen des Membranmoduls (20) aufweist.

6. Vorrichtung nach einem der vorhergehenden Ansprüche, bei der die erste Abdichtung (61a) in eine Nut in dem Gehäuse (4) aufgenommen ist.

7. Vorrichtung nach Anspruch 6, bei der die Nut in einem separaten Element (30) vorgesehen ist, welches an zwei Körperabschnitten des Gehäuses (4) befestigt ist, um eine Verbindung zwischen diesen auszubilden.

8. Vorrichtung nach einem der vorhergehenden Ansprüche, bei der das Membranmodul (20) mehrere Membranschichten aufweist, wobei jede Membranschicht eine Mehrzahl an Membranröhren aufweist, die Seite an Seite angeordnet sind, wobei Verbindungsabschnitte seitlich benachbarte Membranröhren verbinden und wobei die Membranschichten mit Abstandshaltern abwechselnd gestapelt sind.

9. Vorrichtung nach einem der vorhergehenden Ansprüche, bei der das Membranmodul (20) ferner ein Einlassmittel aufweist, das axial innerhalb von einem der axialen Enden des Moduls (20) zum Einführen des ersten Fluids in das Modul (20) vorgesehen ist, bei der sich das Einlassmittel umfänglich um das Modul (20) erstreckt und es angeordnet ist, einen Fluss des ersten Fluids seitlich in das Modul (20) im Wesentlichen um dessen gesamten Umgrenzung herum zu ermöglichen.

10. Vorrichtung nach Anspruch 9, bei der das Einlassmittel mehrere umfänglich beabstandete Einlassöffnungen (7a) in der Umgrenzung des Moduls (20) aufweist.

11. Vorrichtung nach Anspruch 10, bei der die Membranröhren in mehreren Schichten angeordnet sind, die sich seitlich über das Modul (20) hinweg erstrecken, und wobei jede Membranschicht wenigstens einer Einlassöffnung (7a) ausgesetzt ist.

12. Vorrichtung nach Anspruch 10 oder 11, bei der wenigstens zwei Reihen an umfänglich beabstandeten Einlassöffnungen (7a) in der Umgrenzung des Moduls (20) vorgesehen sind, wobei die Mittelpunkte der Einlassöffnungen (7a) in benachbarten Reihen entlang des Umfangs versetzt sind.

13. Vorrichtung nach einem der Ansprüche 9 bis 12, bei der eine Einlasskammer angeordnet ist, um das erste Fluid von dem Einlassanschluss zu empfangen und sie sich um die Umgrenzung des Moduls (20) herum erstreckt.

14. Vorrichtung nach Anspruch 13, bei der die Breite der Einlasskammer, gemessen zwischen einer Innenwand des Gehäuses (4) und der Umgrenzung des Moduls (20), größer oder gleich einem Viertel der Breite des Einlassanaschlusses (9a) ist.

15. Vorrichtung nach einem der vorhergehenden Ansprüche, bei der die ersten und zweiten Fluidflüsse in axialen Richtungen sind, die zueinander entgegengesetzt sind.

## Revendications

1. Appareil pour mettre en contact des premier et second fluides à des pressions élevées avec une membrane de sorte qu'un ou plusieurs composants d'un des fluides passe à travers la membrane dans l'autre fluide, l'appareil étant assemblé à partir d'un logement (4) et d'un module à membrane (20), le module à membrane (20) comprenant une pluralité de tubes à membrane avec des extrémités axiales opposées qui sont enrobées (3) pour séparer les côtés enveloppes des tubes des côtés tubes des tubes aux extrémités axiales de ceux-ci, le module à membrane (20) étant logé dans le logement (4) et comportant une première entrée de fluide (9a) et une première sortie de fluide (9b) pour l'écoulement de fluide sur le côté enveloppe des tubes à membrane et, aux extrémités axiales opposées des tubes à membrane, une seconde entrée de fluide (8a) et une seconde sortie de fluide (8b) pour l'écoulement de fluide sur le côté tube des tubes à membrane, dans lequel l'appareil comprend en outre un premier dispositif d'étanchéité (61a) s'étendant autour du module à membrane (20) et réalisant une étanchéité entre une paroi extérieure du module à membrane (20) et une paroi intérieure du logement (4) afin de séparer la première entrée de fluide (9a) de la première sortie de fluide (9b), **caractérisé en ce que** l'appareil comprend en outre une paire de seconds dispositifs d'étanchéité (62a, 63a) s'étendant chacun autour du module à membrane (20) et réalisant une étanchéité entre la paroi extérieure du module à membrane (20) et la paroi intérieure du logement (4), les seconds dispositifs d'étanchéité (62a, 63a) étant espacés axialement du premier dispositif d'étanchéité (61a) et sur des côtés axiaux opposés de celui-ci, afin de définir une région de première entrée de fluide entre le premier dispositif d'étanchéité (61a) et un des seconds dispositifs d'étanchéité (62a, 63a) et une région de première sortie de fluide entre le premier dispositif d'étanchéité (61a) et l'autre des seconds dispositifs d'étanchéité (62a, 63a), et ledit premier dispositif d'étanchéité (61a) et ladite paire de seconds dispositifs d'étanchéité (62a, 63a) permettant tous l'assemblage dans le logement (4), dans la direction axiale, dudit module à membrane (20) avec ses tubes à membrane enrobées.

2. Appareil selon la revendication 1, dans lequel le module à membrane (20) comporte au moins une ouverture latérale dans sa paroi extérieure pour former la première entrée de fluide (9a) et au moins une ouverture latérale dans sa paroi extérieure pour former la première sortie de fluide (9b).

3. Appareil selon la revendication 1 ou 2, dans lequel la première entrée de fluide (9a) et la première sortie de fluide (9b) sont disposées axialement vers l'intérieur desdites extrémités axiales opposées.

4. Appareil selon une quelconque revendication précédente, dans lequel le module à membrane (20) présente une forme de section transversale correspondant sensiblement à celle du logement (4) afin de s'ajuster de près dans celui-ci.

5. Appareil selon une quelconque revendication précédente, dans lequel le logement (4) comporte au moins une ouverture à bride de diamètre complet (5) pour l'insertion du module à membrane (20).

6. Appareil selon une quelconque revendication précédente, dans lequel le premier dispositif d'étanchéité (61a) est reçu dans une rainure dans le logement (4).

7. Appareil selon la revendication 6, dans lequel la rainure est prévue dans un élément séparé (30) fixé à deux parties de corps du logement (4) pour former un raccordement entre celles-ci.

8. Appareil selon une quelconque revendication précédente, dans lequel le module à membrane (20) comprend une pluralité de couches de membrane, chaque couche de membrane comprenant une pluralité de tubes à membrane agencés côte à côte avec des parties de raccordement raccordant latéralement des tubes à membrane adjacents, et les couches de membrane étant empilées en alternance avec des pièces d'espacement.

9. Appareil selon une quelconque revendication précédente, dans lequel le module à membrane (20) comprend en outre des moyens d'entrée disposés axialement vers l'intérieur d'une desdites extrémités axiales du module (20) pour introduire ledit premier fluide dans le module (20), dans lequel les moyens d'entrée s'étendent de façon périphérique autour du module (20) et sont agencés pour permettre l'écoulement dudit premier fluide latéralement dans le module (20) sensiblement autour de sa périphérie entière.

10. Appareil selon la revendication 9, dans lequel les moyens d'entrée comprennent une pluralité d'ouvertures d'entrée espacées de façon circonférentielle (7a) dans la périphérie du module (20).

11. Appareil selon la revendication 10, dans lequel les tubes à membrane sont agencés en une pluralité de couches s'étendant latéralement à travers le module (20), et dans lequel chaque couche de membrane est exposée à au moins une desdites ouvertures d'entrée (7a).

12. Appareil selon la revendication 10 ou 11, dans lequel au moins deux rangées d'ouvertures d'entrée espacées de façon circonférentielle (7a) sont prévues dans la périphérie du module (20), les centres d'ouvertures d'entrée (7a) dans des rangées adjacentes étant décalés de façon circonférentielle.

13. Appareil selon une quelconque des revendications 9 à 12, dans lequel une chambre d'entrée est agencée pour recevoir le premier fluide à partir de l'orifice d'entrée et s'étend autour de la périphérie du module (20).

14. Appareil selon la revendication 13, dans lequel la largeur de la chambre d'entrée, mesurée entre une paroi intérieure du logement (4) et la périphérie du module (20), est supérieure ou égale à un quart de la largeur de l'orifice d'entrée (9a).

15. Appareil selon une quelconque revendication précédente, dans lequel les premier et second écoulements de fluide sont dans des directions axiales opposées l'une à l'autre.
